# FASCICULE DE BREVET EUROPEEN

(11) **EP 1 767 386 B1**
(45) Date de publication et mention de la délivrance du brevet: **02.06.2010**
(21) Numéro de dépôt: 06300913.8
(22) Date de dépôt: 01.09.2006
(51) Int. Cl.: B60G 3/20

(54) **Train arrière multibras pour un véhicule automobile**
Mehrlenker-Einzelhinterradaufhängung für ein Kraftfahrzeug
Multi-link independent rear suspension for a vehicle

(30) Priorité: 23.09.2005 FR 0509762
(43) Date de publication de la demande: 28.03.2007
(73) Titulaire: Peugeot Citroën Automobiles SA, 78140 Vélizy-Villacoublay (FR)
(72) Inventeur: Lefevre, Eric, 78370 Plaisir (FR)

(56) Documents cités:
- US-A- 4 714 132
- US-A- 4 815 556

## Description

L'invention concerne un train arrière pour un véhicule automobile ainsi qu'un véhicule automobile comportant un tel train arrière.

Dans la conception automobile, on distingue les conceptions basées sur un habitacle rigide et des parties avant et arrière déformables, des conceptions selon lesquelles outre un habitacle rigide, la partie arrière du véhicule automobile est rendue au moins partiellement rigide par un train arrière rigide. De telles conceptions sont choisies lorsque le véhicule automobile comporte dans sa partie arrière des éléments sensibles tel qu'un réservoir de carburant que l'on ne peut pas protéger autrement.

Par ailleurs, certaines réglementations nationales concernant la sécurité des véhicules posent des conditions, notamment en cas de choc arrière à grande vitesse, que l'on ne peut remplir que par des conceptions particulières de la partie arrière du véhicule automobile.

Pour se placer dans l'esprit de la présente invention, il convient de rappeler que, lors d'un choc arrière et notamment lors d'un choc arrière à grande vitesse, l'écrasement de la structure arrière du véhicule entraîne le train arrière qui risque ainsi de s'écraser sur le réservoir de carburant et de le perforer, ce qui est de toute évidence rédhibitoire pour les normes de chocs arrières et pour la sécurité des utilisateurs des véhicules impliqués dans l'accident.

Par ailleurs, il convient de prendre en compte que, généralement, la roue de secours du véhicule automobile est placée derrière le réservoir, vue dans le sens de la marche du véhicule, que la roue de secours soit placée à l'intérieur du coffre dans un logement conformé à cet effet ou en dessous de celui-ci. Ainsi, en cas de choc arrière, la roue de secours est poussée vers le réservoir à moins que des moyens aient été prévus pour dévier la roue de secours de sa trajectoire initiale.

A ce sujet, le document US-A-4 410 201 divulgue par exemple un train arrière rigide qui permet un montage bas de la roue de secours. Cette disposition permet d'obtenir, en plus du gain de place, une protection du réservoir de carburant par le fait que, en cas de choc arrière bas, le logement de la roue de secours et le train arrière reçoivent l'énergie du choc, ce qui fait pivoter l'ensemble vers le haut et évite ainsi de percuter le réservoir de carburant.

Selon une autre conception, objet du document EP A-0 086 690, le train arrière et le logement de la roue de secours sont configurés de manière que, en cas de choc arrière bas, la roue de secours bascule sous le réservoir et évite ainsi de le percuter.

Selon encore une autre conception, objet du document GB-A-1 517 066, le train arrière est disposé de manière que, lors d'un choc arrière, une partie du choc est retransmise au bras de suspension, au longeron et même au cardan de transmission afin de limiter la déformation de la partie arrière du véhicule et de protéger ainsi au mieux le réservoir de carburant qui s'y trouve.

Le document US4815556A divulgue un train arrière tel que décrit dans le préambule de la revendication 1 qui comporte en outre un système spécifique d'amortissement des vibrations et bruits gênants.

Le but de l'invention est de proposer une conception rigide du train arrière pour un véhicule automobile qui assure à la fois une rigidité longitudinale suffisante pour l'absorption de l'impact arrière, en cas de choc arrière à grande vitesse, et une rigidité transversale pour le maintien torsionnel de la carrosserie ou caisse du véhicule automobile pour, notamment, protéger le réservoir de carburant en cas de choc arrière à grande vitesse.

Le but de l'invention est atteint avec un train arrière pour un véhicule automobile conforme à la revendication 1.

Grâce à cette conception selon l'invention, et notamment grâce à la liaison rigide entre chacun des bras de berceau et la chape de fixation correspondante liée au longeronnet, élément de caisse du véhicule, et au bras longitudinal du côté correspondant du véhicule automobile, les efforts du choc arrière sont répartis dans la partie large du train arrière. Cette liaison rigide forme par ailleurs une articulation qui définit un point de rotation du train en cas de choc.

Avantageusement, l'efficacité du train selon l'invention est augmentée par une forme particulière des bras de berceau assurant la protection du réservoir de carburant. En effet, en donnant à chacun des deux bras de berceau une forme légèrement courbe et en les fixant sur la traverse de train de manière à ce que les deux berceaux forment ensemble un V avec des bras de berceau courbés vers l'extérieur du V, on détermine par avance dans quel sens les bras de berceau vont se déformer si la conception rigide de l'ensemble des bras et du train arrière ne devait pas être suffisante pour dévier les efforts résultant d'un choc arrière.

Ainsi, le train arrière selon l'invention participe comme troisième voie d'effort pour aider, en cas de choc arrière à grande vitesse, à absorber et dissiper de l'énergie et assure ainsi de par sa conception, une protection du réservoir de carburant.

Le train arrière de l'invention est essentiellement conçu comme un berceau mécanique dans lequel tous les éléments sont liés, ce qui permet une grande rigidité de l'ensemble et une garantie de la qualité de l'assemblage des pièces et de leur tolérance fonctionnelle pour le réglage.

Grâce à cette conception selon l'invention, le train arrière comprend des éléments de montage conformés l'énergie et assure ainsi de par sa conception, une protection du réservoir de carburant.

Le train arrière de l'invention est essentiellement conçu comme un berceau mécanique dans lequel tous les éléments sont liés, ce qui permet une grande rigidité de l'ensemble et une garantie de la qualité de l'assemblage des pièces et de leur tolérance fonctionnelle pour le réglage.

Grâce à cette conception selon l'invention, le train arrière comprend des éléments de montage conformés pour pouvoir monter le train arrière en un seul bloc sous le châssis d'un véhicule automobile (ou sous la caisse d'un véhicule automobile qui, dans le cadre de la présente invention, est considérée comme équivalente au châssis). Le train arrière de l'invention est donc conçu comme une unité de fabrication conformée pour être préréglée et ensuite montée sur le châssis du véhicule automobile. Ceci constitue un avantage particulier pour l'assemblage des véhicules automobiles par des automates.

Par ailleurs, comme il sera décrit ci-après en davantage de détails, chaque bras longitudinal du train arrière de l'invention est attaché au bras de berceau correspondant par une biellette de pince réglable.

De plus, les bras inférieurs du train arrière de l'invention sont conformés pour recevoir des moyens d'amortissement fixés au moins au châssis. Selon un mode de réalisation représenté dans les dessins annexés, les bras inférieurs sont conformés pour recevoir des ressorts hélicoïdaux fixés à la traverse de train et des amortisseurs hydrauliques fixés au châssis du véhicule automobile.

Le train arrière de l'invention comprend ainsi une traverse centrale qui reprend, de manière symétrique par rapport à l'axe longitudinal de symétrie du véhicule automobile, des deux côtés un bras de berceau, un bras longitudinal, un bras supérieur et un bras inférieur, ainsi qu'une biellette de pince réglable. La liaison finale de ces éléments se fait par une chape de fixation qui lie le bras de berceau rigide au bras longitudinal, le tout étant fixé sous le châssis du véhicule automobile.

Selon encore une autre façon de présenter l'invention, le train arrière selon l'invention comprend une traverse de train destinée à être disposée transversalement par rapport à l'axe longitudinal du véhicule automobile, vu dans le sens de la marche du véhicule, ainsi que deux ensembles triangulaires de bras dont chacun est formé par un bras longitudinal et un bras de berceau convergeant à l'une de leurs extrémités, une chape de fixation étant reliée à l'autre de leurs extrémités par un bras inférieur articulé du côté du bras de berceau à la traverse de train. Approximativement parallèlement au bras inférieur, l'ensemble triangulaire du bras comporte un bras supérieur disposé relativement proche des extrémités du bras de berceau et du bras longitudinal réunis par le bras inférieur ainsi que par une biellette de pince réglable disposée davantage du côté des extrémités réunies par la chape de fixation.

Lorsque le train arrière selon l'invention est monté sous le châssis d'un véhicule automobile, les bras de berceau ouverts en V enferment entre eux un réservoir de carburant ou toute autre élément à protéger. En effet, la manière de laquelle le train arrière est fixé au châssis du véhicule automobile, et la répartition de ces fixations, permettent d'assurer ensemble une rigidité sur toute la zone du réservoir de carburant et ses alentours, que ce soit en direction longitudinale ou en direction transversale. Ainsi, le train arrière selon l'invention permet aussi d'éviter des torsions de caisse ou de châssis dans certaines configurations de véhicule automobile telles que des cabriolets qui sont sans structure de pavillon.

Lors d'un choc arrière à grande vitesse, le train arrière de l'invention va être directement sollicité pour l'absorption de l'énergie. Le train arrière répartit alors les efforts sur les longeronnets se servant de la rigidité. La forme particulière, c'est-à-dire légèrement courbée, des bras de berceau permet en outre un écrasement du train arrière sans venir toucher le réservoir, quand, dans une telle situation, les bras de berceau s'écartent vers l'extérieur du V.

Le train arrière de l'invention permet de mieux maîtriser les points entre eux, étant donné qu'ils sont tous liés les uns aux autres.

D'autres caractéristiques et avantages de la présente invention ressortiront de la description ci-après d'un mode de réalisation d'un train arrière selon l'invention, la description étant faite en référence aux dessins annexés.

Dans ces dessins :
- la figure 1 montre un train arrière selon l'invention en une vue en perspective de dessus,
- la figure 2 montre, en une vue en perspective de dessous, une moitié du train arrière de l'invention,
- la figure 3 montre le train arrière de l'invention en une vue de dessus,
- la figure 4 montre, en une vue en perspective de dessous, le train arrière de l'invention monté sur la caisse d'un véhicule automobile, montrant notamment l'emplacement d'un réservoir à carburant et d'un silencieux d'un système d'échappement,
- la figure 5 montre, en une vue de dessous, la répartition des efforts en cas de choc arrière et
- la figure 6 montre comment les efforts arrivant en cas de choc arrière, font plier les bras de berceau du train arrière de l'invention.

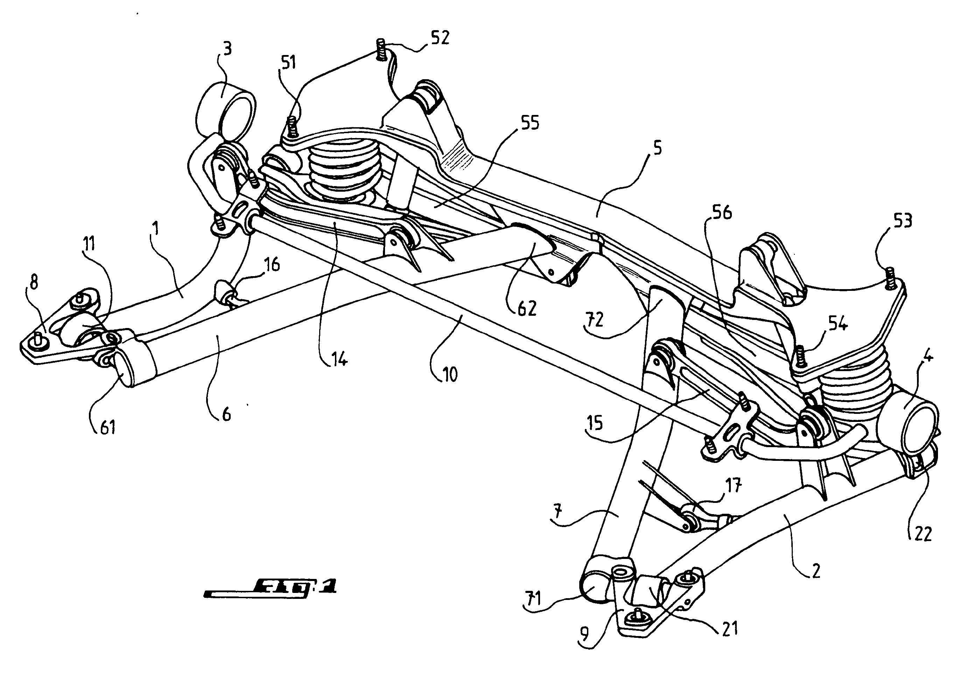

Selon le mode de réalisation représenté sur la figure 1, un train arrière de l'invention pour un véhicule automobile comprend deux bras longitudinaux 1, 2, un pour chaque roue arrière non représentée. Chacun des deux bras longitudinaux 1, 2 comporte deux extrémités opposées référencées 11, 12 pour le bras longitudinal 1 et 21, 22 pour le bras longitudinal 2, dont la première extrémité 11 ou 21 est destinée à être fixée au châssis ou à la caisse du véhicule automobile et dont la seconde extrémité 12 ou 22 comporte un moyeu 3 ou 4 pour la roue arrière correspondante.

Le train arrière de l'invention comprend par ailleurs une traverse de train 5 destinée à être fixée au châssis du véhicule automobile par des éléments de montage 51 à 54 ainsi que deux bras de berceau 6, 7 qui s'étendent de la traverse de train 5 dans laquelle ils sont immobilisés par l'une de leurs extrémités opposées référencées ici 62 et 72, respectivement vers l'une et vers l'autre des premières extrémités 11, 21 des deux bras longitudinaux 1, 2 auxquels ils sont fixés par des chapes de fixation 8, 9. Le train arrière de l'invention comprend en outre, pour chaque roue arrière, un bras inférieur 55, 56 articulé à la traverse de train 5 et relié au moyeu 3 ou 4 de la roue correspondante par une liaison pivot. Chacun des bras longitudinaux 1, 2 est relié aux bras de berceau 6, 7 correspondant à un bras supérieur 14, 15 disposé proche de la traverse de train 5.

Pour des raisons évoquées déjà plus haut, les deux bras de berceau 6, 7 ont une forme légèrement courbe et sont fixés sur la traverse de train 5 de manière à former ensemble un V, dont les bras sont légèrement courbés vers l'extérieur du V. En effet, cette disposition des bras de berceau a pour effet, si la rigidité des bras de berceau 6, 7 devait s'avérer insuffisante lors d'un choc arrière à grande vitesse survenant au véhicule automobile, de s'écarter davantage et, de cette manière, d'éviter que les bras de berceau 6, 7 s'approchent davantage du réservoir de carburant, voire s'encastrent dans celui-ci ou dans tout autre élément du véhicule automobile protégé par le train arrière de l'invention.

La figure 1 montre par ailleurs la disposition d'une barre antidevers qui, toutefois, n'est pas attachée au train arrière de l'invention.

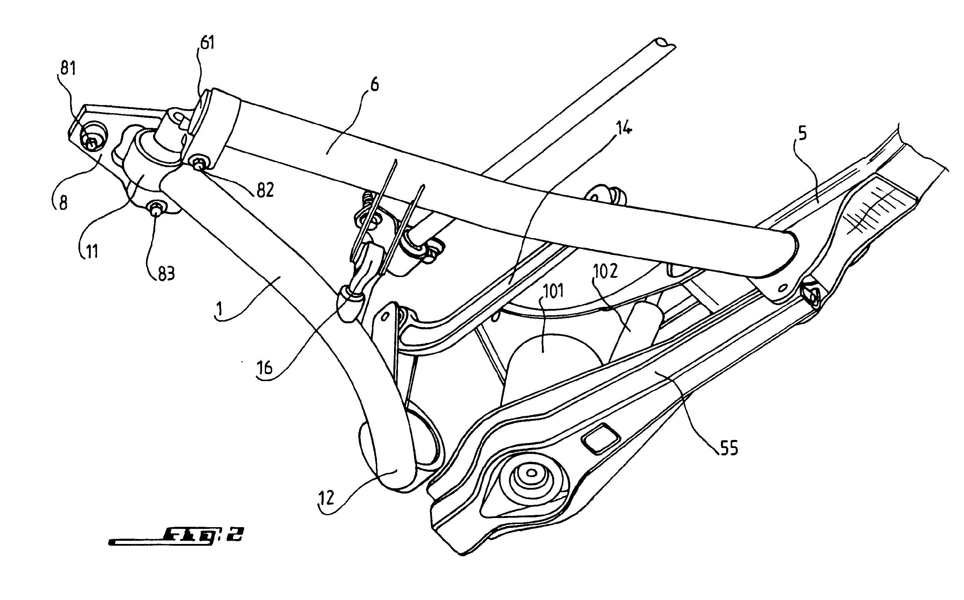

La figure 2 montre la partie droite, par rapport à l'axe longitudinal du véhicule automobile, du train arrière de l'invention. On y voit à nouveau la disposition du bras longitudinal 1, du bras de berceau rigide 6, la chape de fixation 8 réunissant le bras longitudinal 1 et le bras de berceau 6 à leurs extrémités 11 et 61 ainsi que le bras supérieur 14 et le bras inférieur 55 du berceau triangulaire que forment ces bras.

La figure 2 montre par ailleurs aussi une biellette réglable 16 et des éléments de fixation 81 à 83 de la chape de fixation 8 auxquels correspondent des éléments de fixation 91 à 93 de la chape de fixation 9 de la partie gauche du train arrière de l'invention.

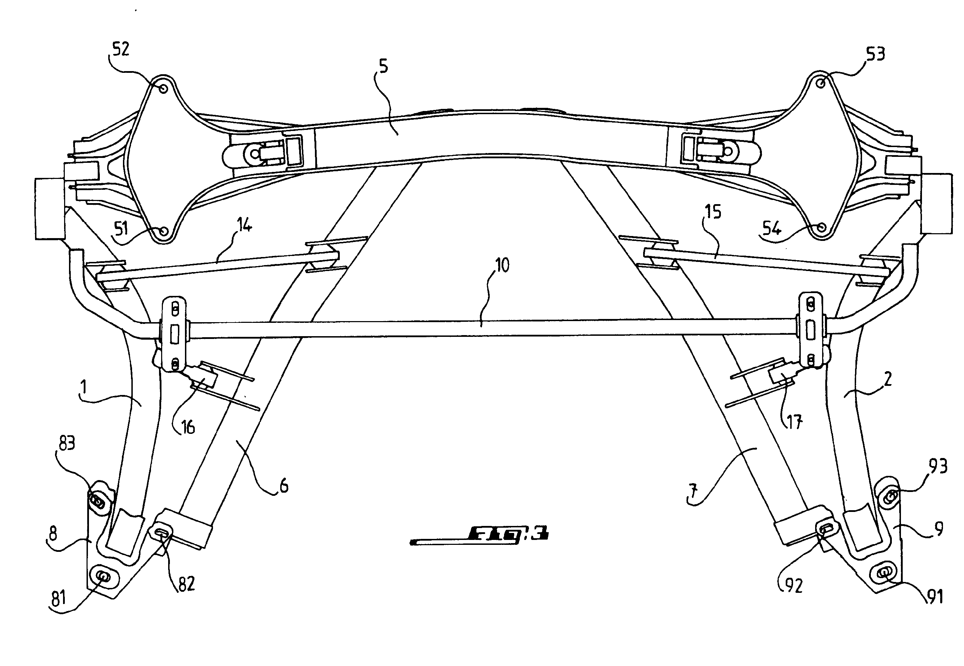

Ainsi, le train arrière de l'invention comprend des éléments de montage 51 à 54, 81 à 83 et 91 à 93 conformés pour pouvoir monter le train arrière en un seul bloc au châssis d'un véhicule automobile. L'ensemble de ces éléments de montage est représenté sur la figure 3.

La figure 3 montre par ailleurs, grâce à sa vue de dessus, le préformage légèrement courbé vers l'extérieur des bras de berceau 6 et 7, d'une part, et la disposition approximativement triangulaire, respectivement du côté droit et du côté gauche du train arrière de l'invention, des bras longitudinaux 1, 2, des bras de berceau 6, 7, des bras inférieurs 55, 56 recouverts ici par la traverse de train 5 et des bras supérieurs 14, 15 disposés essentiellement parallèlement aux bras inférieurs 55, 56 correspondants.

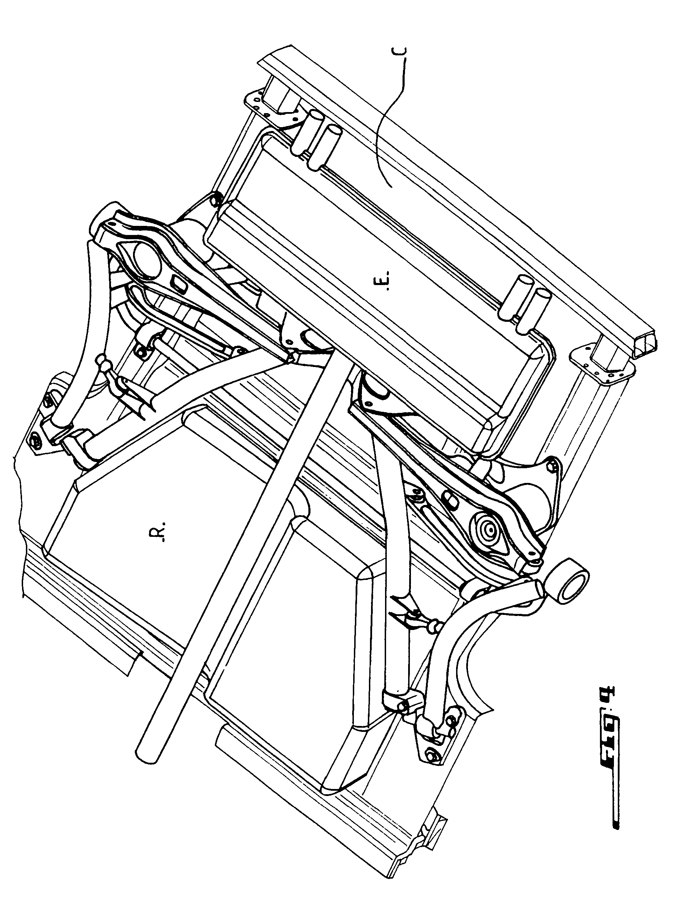

La figure 4 montre le train arrière de l'invention lorsqu'il est intégré dans la partie arrière d'un véhicule automobile. Le train arrière de l'invention est placé ici entre un réservoir de carburant R constituant l'élément à protéger par la rigidité du train arrière de l'invention ainsi qu'un silencieux E d'un système d'échappement. Le train arrière de l'invention, le réservoir R et le silencieux E sont fixés sur le côté inférieur du châssis C.

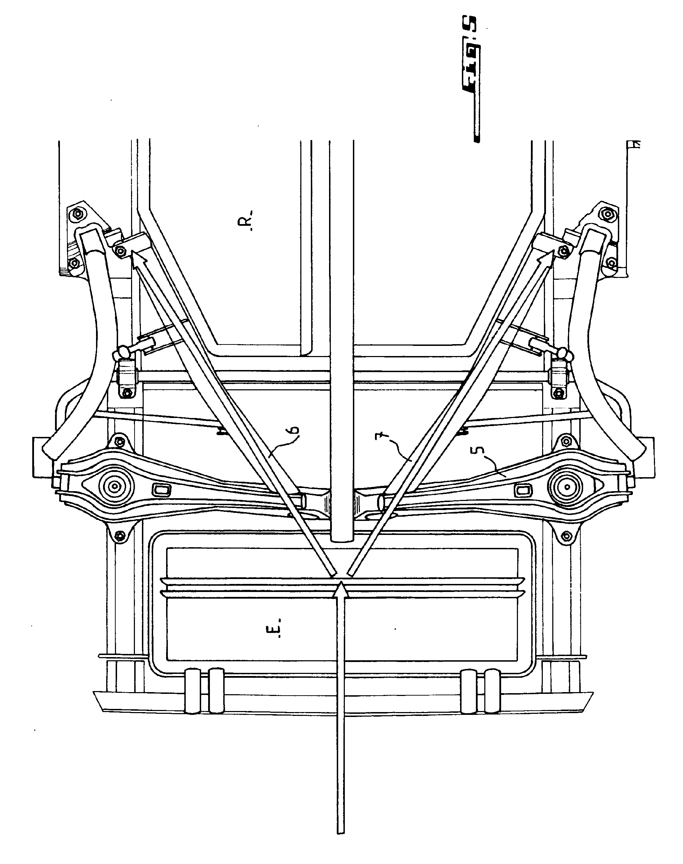

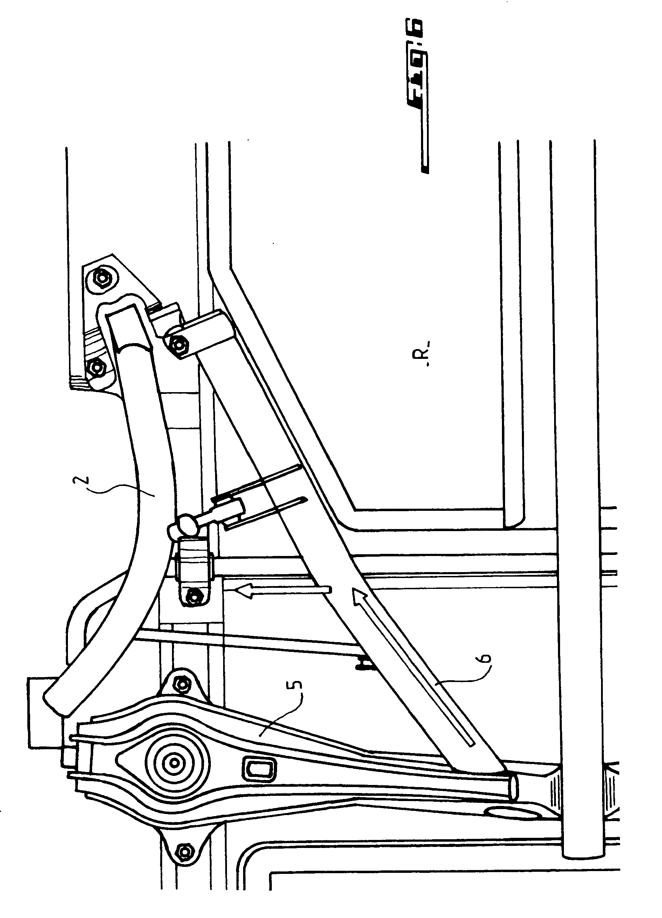

Les figures 5 et 6 montrent sur des vues de dessous du train arrière de l'invention respectivement pour l'ensemble du train arrière et d'un réservoir R et d'un silencieux E, d'une part, et pour la partie droite de cet ensemble, d'autre part, comment les efforts arrivant dans les bras de berceau 6, 7 sont répartis et comment ils vont faire plier les bras de berceau 6, 7 vers l'extérieur de leur disposition en V et donc aussi vers l'extérieur du réservoir R grâce au préformage légèrement courbé des bras de berceau 6, 7.

## Revendications

1. Train arrière pour un véhicule automobile comprenant un bras longitudinal (1, 2) pour chaque roue arrière, chacun des deux bras longitudinaux (1, 2) ayant deux extrémités opposées (11, 12, 21, 22) dont la première extrémité (11, 21) est destinée à être fixée au châssis du véhicule automobile et dont la seconde extrémité (12, 22) comporte un moyeu (3, 4) pour la roue arrière correspondante, comprenant en outre une traverse de train (5) destinée à être fixé au châssis, deux bras de berceau (6, 7) s'étendant de la traverse de train (5) respectivement vers l'une (11) et vers l'autre (21) des premières extrémités des deux bras longitudinaux (1, 2) auxquelles ils sont fixés, et, pour chaque roue arrière, un bras inférieur (55, 56) articulé à la traverse de train (5) et relié au moyeu (3, 4) de la roue par une liaison pivot, chacun des bras longitudinaux (1, 2) étant relié au bras de berceau (6, 7) correspondant par un bras supérieur (14, 15) disposé proche de la traverse de train (5), **caractérisé en ce que** les deux bras de berceau (6, 7) ont une forme légèrement courbe et sont fixés sur la traverse de train (5) de manière à former ensemble un V, les bras de berceau (6, 7) étant courbés vers l'extérieur du V.

2. Train arrière selon la revendication 1, **caractérisé en ce que** les deux bras de berceau (6, 7) sont aptes à se déformer lors d'un choc arrière sur le véhicule dans le sens d'un écartement desdits bras de berceau (6, 7) vers l'extérieur du V.

3. Train arrière selon la revendication 1 ou 2, **caractérisé en ce que** les premières extrémités (11, 21) des deux bras longitudinaux (1, 2) sont fixés au châssis du véhicule par des chapes de fixation (8, 9), lesdites chapes (8, 9) réunissant lesdits bras longitudinaux (1, 2) et les bras de berceau (6, 7) correspondants.

4. Train arrière selon l'une quelconque des revendications 1 à 3, **caractérisé en ce que** chaque bras longitudinal (1, 2) est attaché au bras de berceau (6, 7) correspondant par une biellette de pince (16, 17) réglable.

5. Train arrière selon l'une quelconque des revendications 1 à 4, **caractérisé en ce qu'**il comprend des éléments de montage (51-54, 81-83, 91-93) conformés pour pouvoir monter le train arrière en un seul bloc au châssis du véhicule automobile.

6. Train arrière selon l'une quelconque des revendications 1 à 5, **caractérisé en ce qu'**il forme une unité de fabrication conformé pour être préréglée et ensuite montée sur le châssis du véhicule automobile.

7. Train arrière selon l'une quelconque des revendications 1 à 6, **caractérisé en ce que** les bras inférieurs (55, 56) sont conformés pour recevoir des moyens d'amortissement (101, 102) fixés au moins au châssis.

8. Véhicule automobile, **caractérisé en ce qu'**il comprend un train arrière selon l'une quelconque des revendications 1 à 7.

## Claims

1. A rear suspension for an automobile vehicle comprising a longitudinal arm (1, 2) for each rear wheel, each of the two longitudinal arms (1, 2) having two opposite ends (11, 12, 21, 22), the first end (11, 21) of which is intended to be fixed to the chassis of the automobile vehicle and the second end (12, 22) of which comprises a hub (3, 4) for the corresponding rear wheel, further comprising a cross beam (5) intended to be fixed to the chassis, two cradle arms (6, 7) extending from the cross beam (5) respectively towards one (11) and towards the other (21) of the first ends of the two longitudinal arms (1, 2) to which they are fixed, and, for each rear wheel, a lower arm (55, 56) articulated to the cross beam (5) and connected to the hub (3, 4) of the wheel by a pivot connection, each of the longitudinal arms (1, 2) being connected to the corresponding cradle arm (6, 7) by an upper arm (14, 15) arranged close to the cross beam (5), **characterized in that** the two cradle arms (6, 7) have a slightly curved shape and are fixed on the cross beam (5) so as to form together a V, the cradle arms (6, 7) being curved towards the exterior of the V.

2. The rear suspension according to Claim 1, **characterized in that** the two cradle arms (6, 7) are suited to deform in the case of a rear impact on the vehicle in the direction of a separating of the said cradle arms (6, 7) towards the exterior of the V.

3. The rear suspension according to Claim 1 or 2, **characterized in that** the first ends (11, 21) of the two longitudinal arms (1, 2) are fixed to the chassis of the vehicle by fixing yokes (8, 9), the said yokes (8, 9) joining the said longitudinal arms (1, 2) and the corresponding cradle arms (6, 7).

4. The rear suspension according to any of Claims 1 to 3, **characterized in that** each longitudinal arm (1, 2) is attached to the corresponding cradle arm (6, 7) by an adjustable toe link arm (16, 17).

5. The rear suspension according to any of Claims 1 to 4, **characterized in that** it comprises mounting elements (51-54, 81-83, 91-93) shaped to be able to mount the rear suspension in a single block to the chassis of the automobile vehicle.

6. The rear suspension according to any of Claims 1 to 5, **characterized in that** it forms a unit of manufacture shaped to be preset and then mounted on the chassis of the automobile vehicle.

7. The rear suspension according to any of Claims 1 to 6, **characterized in that** the lower arms (55, 56) are shaped to receive damping means (101, 102) fixed at least to the chassis.

8. An automobile vehicle, **characterized in that** it comprises a rear suspension according to any of Claims 1 to 7.

## Patentansprüche

1. Heckteil für ein Kraftfahrzeug, der einen Längsarm (1, 2) für jedes Hinterrad aufweist, wobei jeder der zwei Längsarme (1, 2) zwei entgegen gesetzte Enden (11, 12, 21, 22) hat, deren erstes Ende (11, 21) dazu bestimmt ist, an dem Chassis des Kraftfahrzeugs befestigt zu werden, und deren zweites Ende (12, 22) eine Nabe (3, 4) für das entsprechende Hinterrad aufweist, der ferner einen Fahrgestellquerbalken (5) aufweist, der dazu bestimmt ist, an dem Chassis befestigt zu werden, wobei sich zwei Sattelarme (6, 7) von dem Fahrgestellquerbalken (5) jeweils zu dem einen (11) und dem anderen (21) der ersten Enden der zwei Längsarme (1, 2), an welchen sie befestigt sind, erstrecken, und für jedes Hinterrad einen unteren Arm (55, 56), der an dem Fahrgestellquerbalken (5) angelenkt und mit der Nabe (3, 4) des Rads durch eine Zapfenverbindung verbunden ist, wobei jeder der Längsarme (1, 2) mit dem entsprechenden Sattelarm (6, 7) durch einen oberen Arm (14, 15) verbunden ist, der in der Nähe des Fahrgestellquerbalkens (5) angeordnet ist, **dadurch gekennzeichnet, dass** die zwei Sattelarme (6, 7) eine leicht gebogene Form haben und auf dem Fahrgestellquerbalken (5) derart befestigt sind, dass sie gemeinsam ein V bilden, wobei die Sattelarme (6, 7) zur Außenseite des V gebogen sind.

2. Heckteil nach Anspruch 1, **dadurch gekennzeichnet, dass** sich die zwei Sattelarme (6, 7) bei einem hinteren Stoß an dem Fahrzeug in die Richtung einer Abspreizung der Sattelarme (6, 7) zu der Außenseite des V verformen können.

3. Heckteil nach Anspruch 1 oder 2, **dadurch gekennzeichnet, dass** die ersten Enden (11, 21) der zwei Längsarme (1, 2) an dem Fahrzeugchassis mit Befestigungsgabeln (8, 9) befestigt sind, wobei die Gabeln (8, 9) die Längsarme (1, 2) und die entsprechenden Sattelarme (6, 7) vereinen.

4. Heckteil nach einem der Ansprüche 1 bis 3, **dadurch gekennzeichnet, dass** jeder Längsarm (1, 2) an dem entsprechenden Sattelarm (6, 7) durch einen einstellbaren Zangenschwingarm (16, 17) befestigt ist.

5. Heckteil nach einem der Ansprüche 1 bis 4, **dadurch gekennzeichnet, dass** er Montageelemente (51-54, 81-83, 91-93) aufweist, die ausgebildet sind, um den Heckteil in einem einzigen Block an das Chassis des Kraftfahrzeugs zu montieren.

6. Heckteil nach einem der Ansprüche 1 bis 5, **dadurch gekennzeichnet, dass** er eine Herstellungseinheit bildet, die ausgebildet ist, um voreingestellt und dann auf das Chassis des Kraftfahrzeugs montiert zu werden.

7. Heckteil nach einem der Ansprüche 1 bis 6, **dadurch gekennzeichnet, dass** die unteren Arme (55, 56) ausgebildet sind, um Dämpfmittel (101, 102) aufzunehmen, die mindestens am Chassis befestigt sind.

8. Kraftfahrzeug, **dadurch gekennzeichnet, dass** es einen Heckteil nach einem der Ansprüche 1 bis 7 aufweist.
